# EUROPEAN PATENT APPLICATION

(11) **EP 2 709 344 A2**
(43) Date of publication of application: **19.03.2014**
(21) Application number: 13169257.6
(22) Date of filing: 24.05.2013
(51) Int. Cl.: H04M 1/725

(54) **Mobile terminal and control method thereof**

(30) Priority: 13.09.2012 KR 20120101739
(71) Applicant: LG Electronics, Inc., Seoul, 150-721 (KR)
(72) Inventor: Jeon, Hyunjoo, SEOUL (KR)
(74) Representative: Cabinet Plasseraud

(57) **Abstract**

The present disclosure relates to a mobile terminal and a control method thereof capable of receiving an electronic mail. A mobile terminal according to an embodiment of the present disclosure may include a display unit configured to display an electronic mail being written in an electronic mail writing mode, a controller configured to detect another electronic mail associated with the electronic mail being written, and to control the display unit to display the electronic mail being written in a first screen region and display at least part of the detected electronic mail in a second screen region other than the first screen region. The controller may detect the another electronic mail associated with the electronic mail being written from at least one of an electronic mail received during the writing of the electronic mail and prestored electronic mails.

## Description

### BACKGROUND

### 1. Field of the invention

The present disclosure relates to a mobile terminal, and more particularly, to a mobile terminal and a control method thereof capable of receiving an electronic mail.

### 2. Description of the related art

Terminals can be classified into mobile or portable terminals and a stationary terminals based on its mobility. Furthermore, the mobile terminals can be further classified into handheld terminals and vehicle mount terminals based on whether or not it can be directly carried by a user.

As it becomes multifunctional, for example, such a terminal is allowed to capture still images or moving images, play music or video files, play games, receive broadcast and the like, so as to be implemented as an integrated multimedia player. Moreover, the improvement of structural or software elements of the terminal may be taken into consideration to support and enhance the functions of the terminal.

Owing to such an improvement, the mobile terminal can transmit and receive an electronic mail. However, when a new electronic mail is received during the writing of an electronic mail, the display unit of the mobile terminal displays only an indicator indicating that an electronic mail has been received, but does not display the content of the received electronic mail. Accordingly, the user of the mobile terminal experiences an inconvenience that he or she cannot immediately check the received electronic mail while writing or transmitting an electronic mail.

### SUMMARY

An objective of the present disclosure is to provide a mobile terminal and a control method thereof capable of enhancing the user's convenience while writing an electronic mail.

A mobile terminal according to an embodiment of the present disclosure may include a display unit configured to display an electronic mail being written in an electronic mail writing mode; a controller configured to detect another electronic mail associated with the electronic mail being written; and to control the display unit to display the electronic mail being written in a first screen region and display at least part of the detected electronic mail in a second screen region other than the first screen region. The controller may detect the another electronic mail associated with the electronic mail being written from at least one of an electronic mail received during the writing of the electronic mail and prestored electronic mails.

According to an embodiment, the controller may detect the another electronic mail associated with the electronic mail being written when an icon corresponding to the function of transmitting the electronic mail being written is selected.

According to an embodiment, the controller may detect the another electronic mail associated with the electronic mail being written when a first touch input is sensed on the icon.

According to an embodiment, the controller may generate the first and the second screen region when the another electronic mail is detected in a state that the electronic mail being written is displayed on the display unit, and control the display unit to display the electronic mail being written in the first screen region, and display at least part of the detected electronic mail in the second screen region.

According to an embodiment, the controller may control the display unit to display a list of the detected electronic mails or display contents contained in the detected electronic mails, respectively, in the second screen region.

According to an embodiment, when the display unit is divided into a plurality of regions, the second screen region may include at least one of a region of the plurality of regions, a region overlapped with the electronic mail being written, a region overlapped with a virtual keypad, and a pop-up window region.

According to an embodiment, when a new electronic mail is received during the writing of the electronic mail, the controller may determine a degree of association between the received electronic mail and the electronic mail being written, and control the display unit to display a message indicating that the new electronic mail has been received based on the determination result.

According to an embodiment, the message may include information associated with the received electronic mail, and the controller may generate the first and the second screen region when the message is selected, and control the display unit to display at least part of the received electronic mail in the second screen region.

According to an embodiment, the controller may group the detected electronic mails into a plurality of groups based on the attribute information of the detected electronic mails, respectively, and control the display unit to display electronic mails contained in the plurality of groups, respectively, by dividing them into each group.

According to an embodiment, the attribute information of the detected electronic mails, respectively, may include at least one of degree-of-association information with the electronic mail being written, time information at which the detected electronic mail is received and transmitted, priority information of the detected electronic mail, and information associated with whether or not an attached file is contained in the detected electronic mail.

According to an embodiment, the controller may add a content contained in the detected electronic mails, respectively, to the electronic mail being written.

According to an embodiment, when the type of content is selected, the controller may add a content corresponding to the selected type among contents contained in the detected electronic mails, respectively, to the electronic mail being written.

According to an embodiment, the type of content may include at least one of the subject, addressee, carbon copy, body content, and attached file of the detected electronic mails, respectively.

According to an embodiment, the controller may compare a content contained in the electronic mail being written with contents contained in the detected electronic mails, respectively, and recommend a content to be added to the electronic mail being written among the contents contained in the detected electronic mails, respectively.

According to an embodiment, the controller may control the display unit to display the recommended content in a highlighted manner among the contents contained in the detected electronic mails, respectively.

According to an embodiment, when at least part of the content is selected, the controller may add the selected content to the electronic mail being written.

According to an embodiment, when the selected content is added to the electronic mail being written, the controller may control the display unit to display an indicator on at least one of the detected electronic mails containing the selected content.

A control method of a mobile terminal according to an embodiment of the present disclosure may include displaying an electronic mail being written in an electronic mail writing mode on the display unit; detecting another electronic mail associated with the electronic mail being written; and displaying the electronic mail being written in a first screen region and displaying at least part of the detected electronic mail in a second screen region other than the first screen region. Said detecting another electronic mail associated with the electronic mail being written may include detecting the another electronic mail associated with the electronic mail being written from at least one of an electronic mail received during the writing of the electronic mail and prestored electronic mails.

According to an embodiment, said detecting another electronic mail associated with the electronic mail being written may include detecting the another electronic mail associated with the electronic mail being written when an icon corresponding to the function of transmitting the electronic mail being written is selected.

According to an embodiment,, the method may further include adding contents contained in the detected electronic mails, respectively, to the electronic mail being written.

### BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:
FIG. 1 is a block diagram illustrating a mobile terminal according to the present disclosure;
FIGS. 2A and 2B are perspective views illustrating an external appearance of the mobile terminal according to the present disclosure;
FIG. 3 is a flow chart for explaining a mobile terminal according to an embodiment of the present disclosure; and
FIGS. 4 through 18 are conceptual views illustrating an operation example of the mobile terminal according to FIG. 3.

### DETAILED DESCRIPTION OF THE INVENTION

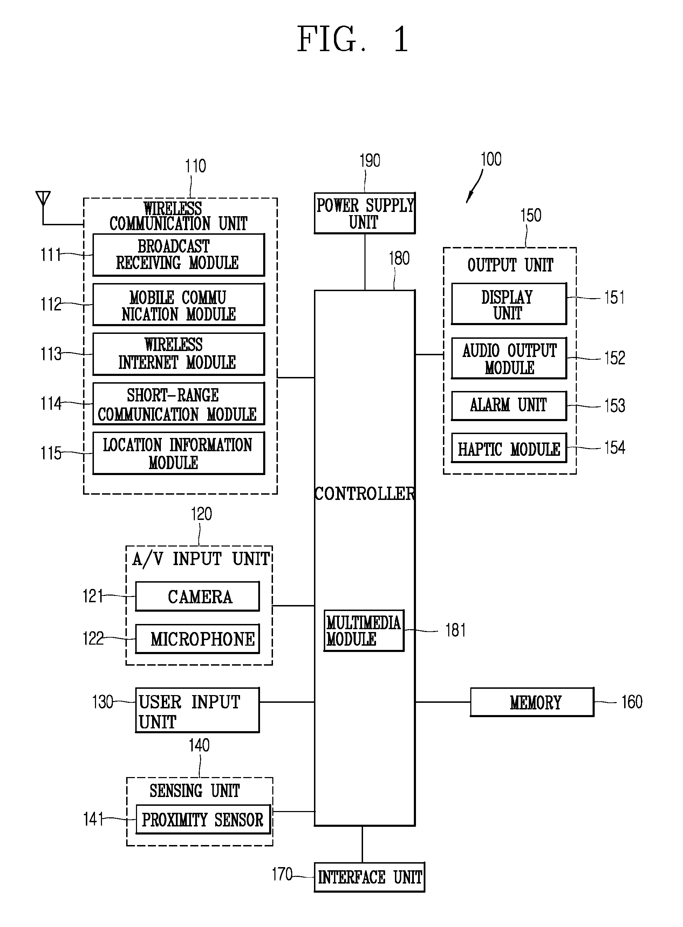

FIG. 1 is a block diagram illustrating a mobile terminal 100 according to an embodiment of the present invention. Referring to FIG. 1, the mobile terminal 100 may include a wireless communication unit 110, an audio/video (A/V) input unit 120, a user input unit 130, a sensing unit 140, an output unit 150, a memory 160, an interface unit 170, a controller 180, a power supply unit 190, and the like. However, the constituent elements as illustrated in FIG. 1 are not necessarily required, and the mobile communication terminal may be implemented with greater or less number of elements than those illustrated elements.

Hereinafter, the constituent elements 110-190 of the mobile terminal 100 will be described in sequence.

The wireless communication unit 110 may include one or more elements allowing radio communication between the mobile terminal 100 and a wireless communication system, or allowing radio communication between the mobile terminal 100 and a network in which the mobile terminal 100 is located. For example, the wireless communication unit 110 may include a broadcast receiving module 111, a mobile communication module 112, a wireless Internet module 113, a short-range communication module 114, a location information module 115, and the like.

The broadcast receiving module 111 receives broadcast signals and/or broadcast associated information from an external broadcast management server through a broadcast channel. The broadcast associated information may mean information regarding a broadcast channel, a broadcast program, a broadcast service provider, and the like. The broadcast associated information may also be provided through a mobile communication network. In this case, the broadcast associated information may be received by the mobile communication module 112. The broadcast signal and broadcast-associated information received through the broadcast receiving module 111 may be stored in the memory 160.

The mobile communication module 112 transmits and/or receives a radio signal to and/or from at least one of a base station, an external terminal and a server over a mobile communication network. The radio signal may include a voice call signal, a video call signal or various types of data according to text and/or multimedia message transmission and reception.

The wireless Internet module 113 as a module for supporting wireless Internet access may be built-in or externally installed to the mobile terminal 100. A variety of wireless Internet access techniques may be used, such as WLAN (Wireless LAN), Wi-Fi, Wibro (Wireless Broadband), Wimax (World Interoperability for Microwave Access), HSDPA (High Speed Downlink Packet Access), and the like.

The short-range communication module 114 refers to a module for supporting a short-range communication. A variety of short-range communication technologies may be used, such as Bluetooth, Radio Frequency IDentification (RFID), Infrared Data Association (IrDA), Ultra WideBand (UWB), ZigBee, and the like.

The location information module 115 is a module for acquiring a location of the mobile terminal 100, and there is a GPS module as a representative example.

Subsequently, referring to FIG. 1, the A/V(audio/video) input unit 120 receives an audio or video signal, and the AN (audio/video) input unit 120 may include a camera 121, a microphone 122, and the like. The camera 121 processes an image frame, such as still or moving images, obtained by an image sensor in a video phone call or image capturing mode. The processed image frame may be displayed on a display unit 151. The image frames processed by the camera 121 may be stored in the memory 160 or transmitted to an external device through the wireless communication unit 110. Two or more cameras 121 may be provided according to the use environment of the mobile terminal.

The microphone 122 receives an external audio signal through a microphone in a phone call mode, a recording mode, a voice recognition mode, and the like, and processes the audio signal into electrical voice data. The processed voice data may be converted and outputted into a format that is transmittable to a mobile communication base station through the mobile communication module 112 in the phone call mode. The microphone 122 may implement various types of noise canceling algorithms to cancel noise generated during the process of receiving the external audio signal.

The user input unit 130 may generate input data to control an operation of the mobile terminal 100. The user input unit 130 may be configured with a keypad, a dome switch, a touch pad (pressure/capacitance), a jog wheel, a jog switch, and the like.

The sensing unit 140 detects presence or absence of the user's contact, and a current status of the mobile terminal 100 such as an opened or closed configuration, a location of the mobile terminal 100, an orientation of the mobile terminal 100, an acceleration or deceleration of the mobile terminal 100, and the like, and generates a sensing signal for controlling the operation of the mobile terminal 100. For example, when the mobile terminal 100 is a slide phone type, the sensing unit 140 may sense an opened or closed configuration of the slide phone. Furthermore, the sensing unit 140 may sense whether or not power is supplied from the power supply unit 190, or whether or not an external device is coupled to the interface unit 170.

The sensing unit 140 may include a proximity sensor 141. Furthermore, the sensing unit 140 may include a touch sensor (not shown) for sensing a touch operation with respect to the display unit 151.

The touch sensor may be implemented as a touch film, a touch sheet, a touch pad, and the like. The touch sensor may be configured to convert changes of a pressure applied to a specific part of the display unit 151, or a capacitance generated from a specific part of the display unit 151, into electric input signals. The touch sensor may be configured to sense not only a touched position and a touched area, but also a touch pressure.

When the touch sensor and display unit 151 forms an interlayer structure, the display unit 151 may be used as an input device rather than an output device. The display unit 151 may be referred to as a "touch screen".

When there is a touch input through the touch screen, the corresponding signals may be transmitted to a touch controller (not shown). The touch controller processes signals transferred from the touch sensor, and then transmits data corresponding to the processed signals to the controller 180. Accordingly, the controller 180 may sense which region of the display unit 151 has been touched.

When the touch screen is a capacitance type, the proximity of a sensing object may be detected by changes of an electromagnetic field according to the proximity of a sensing object. The touch screen may be categorized into a proximity sensor 141.

The proximity sensor 141 refers to a sensor for detecting the presence or absence of a sensing object using an electromagnetic field or infrared rays without a mechanical contact. The proximity sensor 141 has a longer lifespan and more enhanced utility than a contact sensor. The proximity sensor 141 may include an optical transmission type photoelectric sensor, a direct reflective type photoelectric sensor, a mirror reflective type photoelectric sensor, a high-frequency oscillation proximity sensor, a capacitance type proximity sensor, a magnetic type proximity sensor, an infrared rays proximity sensor, and the like.

Hereinafter, for the sake of convenience of brief explanation, a behavior of closely approaching the touch screen without contact will be referred to as "proximity touch", whereas a behavior that the pointer substantially comes in contact with the touch screen will be referred to as "contact touch".

The proximity sensor 141 senses proximity touch, and proximity touch patterns (e.g., distance, direction, speed, time, position, moving status, etc.). Information relating to the sensed proximity touch and the sensed proximity touch patterns may be output onto the touch screen.

The output unit 150 may generate an output related to visual, auditory, tactile senses. The output unit 150 may include a display unit 151, an audio output module 153, an alarm unit 154, a haptic module 155, and the like.

The display unit 151 may display (output) information processed in the mobile terminal 100. For example, when the mobile terminal 100 is operated in a phone call mode, the display unit 151 may display a user interface (UI) or graphic user interface (GUI) related to a phone call. When the mobile terminal 100 is operated in a video call mode or image capturing mode, the display unit 151 may display a captured image, a received image, UI, GUI, or the like.

The display unit 151 may include at least one of a liquid crystal display (LCD), a thin film transistor-liquid crystal display (TFT-LCD), an organic light emitting diode (OLED) display, a flexible display, a 3-dimensional (3D) display, and an e-ink display.

At least one of those displays (or display devices) included in the display unit 151 may be configured with a transparent or optical transparent type to allow the user to view the outside therethrough. It may be referred to as a transparent display. A representative example of the transparent display may be a transparent OLED (TOLED), and the like. Under this configuration, the user can view an object positioned at a rear side of the mobile device body through a region occupied by the display unit 151 of the mobile device body.

There may exist two or more display units 151 according to the implementation of the mobile terminal 100. For example, a plurality of the display units 151 may be placed on one surface in a separate or integrated manner, or may be place on different surfaces, respectively.

The audio output module 153 may output audio data received from the wireless communication unit 110 or stored in the memory 160, in a call-receiving mode, a call-placing mode, a recording mode, a voice selection mode, a broadcast reception mode, and the like. The audio output module 153 may output an audio signal related to a function carried out in the mobile terminal 100 (for example, sound alarming a call received or a message received, and the like). The audio output module 153 may include a receiver, a speaker, a buzzer, and the like.

The alarm unit 154 outputs signals notifying the occurrence of an event from the mobile terminal 100. The examples of an event occurring from the mobile terminal 100 may include a call received, a message received, a key signal input, a touch input, and the like. The alarm unit 154 may output not only video or audio signals, but also other types of signals such as signals for notifying the occurrence of an event in a vibration manner. Since the video or audio signals may be also output through the display unit 151 or the audio output unit 153, the display unit 151 and the audio output module 153 may be categorized into part of the alarm unit 154.

The haptic module 155 generates various tactile effects that can be felt by the user. A representative example of the tactile effects generated by the haptic module 155 may include vibration. Vibration generated by the haptic module 155 may have a controllable intensity, a controllable pattern, and the like. For example, different vibrations may be output in a synthesized manner or in a sequential manner.

The haptic module 155 may generate various tactile effects, including not only vibration, but also arrangement of pins vertically moved with respect to a skin surface being touched, air injection force or air suction force through an injection port or suction port, touch by a skin surface, contact with an electrode, effects by stimulus such as an electrostatic force, reproduction of cold or hot feeling using a heat absorbing device or heat emitting device, and the like.

The haptic module 155 may be configured to transmit tactile effects through the user's direct contact, or the user's muscular sense using a finger or a hand. Two or more haptic modules 155 may be provided according to the configuration of the mobile terminal 100.

The memory 160 may store a program for operating the controller 180, or temporarily store input/output data (for example, phonebooks, messages, still images, moving images, and the like). The memory 160 may store data related to various patterns of vibrations and sounds outputted when performing a touch input on the touch screen.

The memory 160 may be implemented using any type of suitable storage medium including a flash memory type, a hard disk type, a multimedia card micro type, a memory card type (e.g., SD or DX memory), Random Access Memory (RAM), Static Random Access Memory (SRAM), Read-Only Memory (ROM), Electrically Erasable Programmable Read-only Memory (EEPROM), Programmable Read-only Memory (PROM), magnetic memory, magnetic disk, optical disk, and the like. Also, the mobile terminal 100 may operate a web storage which performs the storage function of the memory 160 on the Internet.

The interface unit 170 may generally be implemented to interface the portable terminal with external devices. The interface unit 170 may allow a data reception from an external device, a power delivery to each component in the mobile terminal 100, or a data transmission from the mobile terminal 100 to an external device. The interface unit 170 may include, for example, wired/wireless headset ports, external charger ports, wired/wireless data ports, memory card ports, ports for coupling devices having an identification module, audio Input/Output (I/O) ports, video I/O ports, earphone ports, and the like.

The identification module may be configured as a chip for storing various information required to authenticate an authority to use the mobile terminal 100, which may include a User Identity Module (UIM), a Subscriber Identity Module (SIM), and the like. Also, the device having the identification module (hereinafter, referred to as "identification device") may be implemented in a type of smart card. Hence, the identification device can be coupled to the mobile terminal 100 via a port.

The interface unit 170 may serve as a path for power to be supplied from an external cradle to the mobile terminal 100 when the mobile terminal 100 is connected to the external cradle or as a path for transferring various command signals inputted from the cradle by a user to the mobile terminal 100. Such various command signals or power inputted from the cradle may operate as signals for recognizing that the mobile terminal 100 has accurately been mounted to the cradle.

The controller 180 typically controls the overall operations of the mobile terminal 100. For example, the controller 180 performs the control and processing related to telephony calls, data communications, video calls, and the like. The controller 180 may include a multimedia module 181 which provides multimedia playback. The multimedia module 181 may be configured as part of the controller 180 or as a separate component. The controller 180 can perform a pattern recognition processing so as to recognize a handwriting or drawing input on the touch screen as text or image.

The power supply unit 190 may receive external or internal power to provide power required by various components under the control of the controller 180.

Various embodiments described herein may be implemented in a computer or similar device readable medium using software, hardware, or any combination thereof.

For hardware implementation, it may be implemented by using at least one of application specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, and electrical units designed to perform the functions described herein. In some cases, such embodiments may be implemented in the controller 180 itself.

For software implementation, the embodiments such as procedures or functions may be implemented together with separate software modules that allow performing of at least one function or operation. Software codes can be implemented by a software application written in any suitable programming language. The software codes may be stored in the memory 160 and executed by the controller 180.

Hereinafter, the method of processing a user input to the mobile terminal 100 will be described.

The user input unit 130 is manipulated to receive a command for controlling the operation of the mobile terminal 100, and may include a plurality of manipulation units. The manipulation units may be commonly designated as a manipulating portion, and any method may be employed if it is a tactile manner allowing the user to perform manipulation with a tactile feeling.

Various kinds of visual information may be displayed on the display unit 151. The visual information may be displayed in the form of a character, a numeral, a symbol, a graphic, an icon, and the like. For an input of the visual information, at least one of a character, a numeral, a symbol, a graphic, and an icon may be displayed with a predetermined arrangement so as to be implemented in the form of a keypad. Such a keypad may be referred to as a so-called "soft key."

The display unit 151 may operate on an entire region or operate by dividing into a plurality of regions. In case of the latter, the plurality of regions may be configured to operate in an associative way. For example, an output window and an input window may be displayed on the upper and lower portions of the display unit 151, respectively. The output window and the input window may be regions allocated to output or input information, respectively. A soft key on which numerals for inputting a phone number or the like are displayed is outputted on the input window. When the soft key is touched, a numeral corresponding to the touched soft key is displayed on the output window. When the first manipulating unit is manipulated, a phone call connection for the phone number displayed on the output window will be attempted or a text displayed on the output window will be entered to the application.

The display unit 151 or touch pad may be configured to sense a touch scroll. The user may move an object displayed on the display unit 151, for example, a cursor or pointer placed on an icon or the like, by scrolling the display unit 151 or touch pad. Moreover, when a finger is moved on the display unit 151 or touch pad, a path being moved by the finger may be visually displayed on the display unit 151. It may be useful to edit an image displayed on the display unit 151.

In order to cope with a case where the display unit 151 and touch pad are touched together within a predetermined period of time, one function of the terminal 100 may be implemented. For the case of being touched together, there is a case when the user clamps a body of the mobile terminal 100 using his or her thumb and forefinger. For one of the above functions implemented in the mobile terminal 100, for example, there may be an activation or de-activation for the display unit 151 or touch pad.

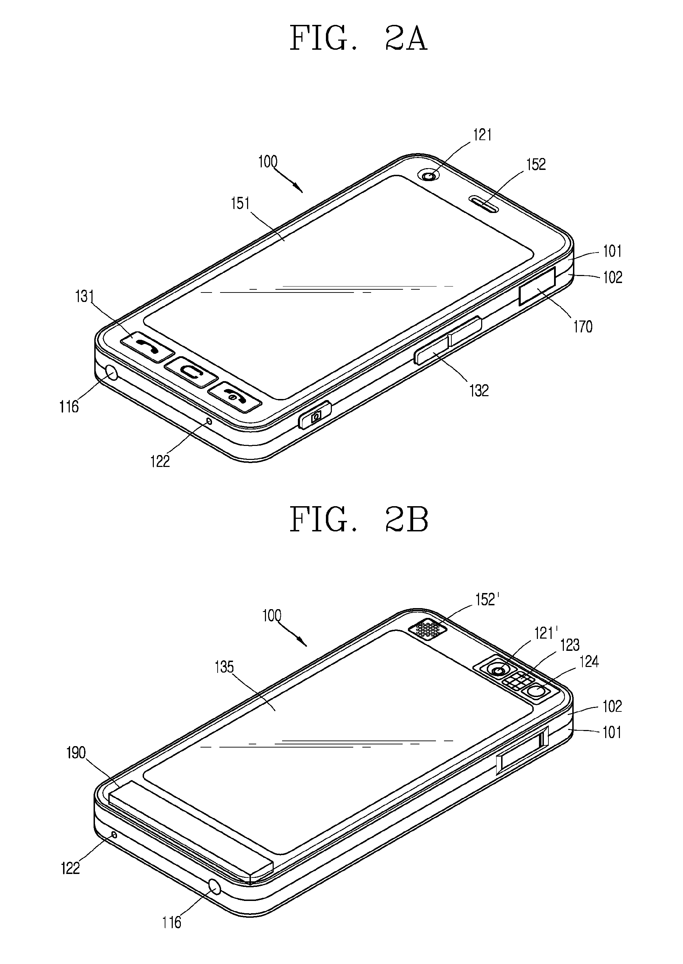

FIGS. 2A and 2B are perspective views illustrating the external appearance of a mobile terminal 100 related to the present disclosure. FIG. 2A is a front and a side view illustrating the mobile terminal 100, and FIG. 2B is a rear and the other side view illustrating the mobile terminal 100.

Referring to FIG. 2A, the mobile terminal 100 disclosed herein is provided with a bar-type terminal body. However, the present invention is not only limited to this type of terminal, but also applicable to various structures of terminals such as slide type, folder type, swivel type, swing type, and the like, in which two and more bodies are combined with each other in a relatively movable manner.

The terminal body includes a case (casing, housing, cover, etc.) forming an appearance of the terminal. In this embodiment, the case may be divided into a front case 101 and a rear case 102. Various electronic components may be integrated in a space formed between the front case 101 and the rear case 102. At least one middle case may be additionally disposed between the front case 101 and the rear case 102.

The cases may be formed by injection-molding a synthetic resin or may be also formed of a metal material such as stainless steel (STS), titanium (Ti), or the like.

A display unit 151, an audio output module 152, a camera 121, a user input unit 130 (refer to FIG. 1), a microphone 122, an interface 170, and the like may be arranged on the terminal body, mainly on the front case 101.

The display unit 151 occupies a most portion of the front case 101. The audio output unit 152 and the camera 121 are disposed on a region adjacent to one of both ends of the display unit 151, and the user input unit 131 and the microphone 122 are disposed on a region adjacent to the other end thereof. The user interface 132 and the interface 170, and the like, may be disposed on a lateral surface of the front case 101 and the rear case 102.

The user input unit 130 is manipulated to receive a command for controlling the operation of the portable terminal 100. The user input unit 130 may include a plurality of manipulation units 131, 132.

The first and the second manipulation unit 131, 132 may receive various commands. For example, the first manipulation unit 131 may be used to receive a command, such as start, end, scroll, or the like. The second manipulation unit 132 may be used to receive a command, such as controlling a volume level being outputted from the audio output unit 152, or switching it into a touch recognition mode of the display unit 151.

Referring to FIG. 2B, a camera 121' may be additionally mounted on a rear surface of the terminal body, namely, the rear case 102. The rear camera 121' has an image capturing direction, which is substantially opposite to the direction of the front camera 121 (refer to FIG. 2A), and may have different number of pixels from those of the front camera 121.

For example, that the front camera 121 may be configured to have a relatively small number of pixels, and the rear camera 121' may be configured to have a relatively large number of pixels. Accordingly, in case where the front camera 121 is used for video communication, it may be possible to reduce the size of transmission data when the user captures his or her own face and sends it to the other party in real time. On the other hand, the rear camera 121' may be used for the purpose of storing high quality images.

On the other hand, the cameras 121, 121' may be provided in the terminal body in a rotatable and popupable manner.

Furthermore, a flash 123 and a mirror 124 may be additionally disposed adjacent to the rear camera 121'. The flash 123 illuminates light toward an object when capturing the object with the camera 121'. The mirror 124 allows the user to look at his or her own face, or the like, in a reflected way when capturing himself or herself (in a self-portrait mode) by using the rear camera 121'.

Furthermore, a rear audio output unit 152' may be additionally disposed on a rear surface of the terminal body. The rear audio output unit 152' together with the front audio output unit 152 (refer to FIG. 2A) can implement a stereo function, and it may be also used to implement a speaker phone mode during a phone call.

Furthermore, an antenna 116 for receiving broadcast signals may be additionally disposed on a lateral surface of the terminal body. The antenna 116 constituting part of a broadcast receiving module 111 (refer to FIG. 1) may be provided so as to be pulled out from the terminal body.

Furthermore, a power supply unit 190 for supplying power to the portable terminal 100 may be mounted on the terminal body. The power supply unit 190 may be configured so as to be incorporated in the terminal body, or directly detachable from the outside of the terminal body.

A touch pad 135 for detecting a touch may be additionally mounted on the rear case 102. The touch pad 135 may be also configured with an optical transmission type, similarly to the display unit 151 (refer to FIG. 2A). Alternatively, a rear display unit for displaying visual information may be additionally mounted on the touch pad 135. At this time, information displayed on the both surfaces of the front display unit 151 and rear display unit may be controlled by the touch pad 135.

The touch pad 135 may be operated in conjunction with the display unit 151 of the front case 101. The touch pad 135 may be disposed in parallel at a rear side of the display unit 151. The touch pad 135 may have the same size as or a smaller size than the display unit 151.

Meanwhile, the mobile terminal 100 can transmit and receive an electronic mail. However, when a new electronic mail is received during the writing of an electronic mail, the display unit 151 of the mobile terminal 100 displays only an indicator indicating that an electronic mail has been received, but does not display the content of the received electronic mail. Accordingly, the user of the mobile terminal 100 experiences an inconvenience that he or she cannot immediately check the received electronic mail while writing or transmitting an electronic mail.

Accordingly, a mobile terminal 100 and a control method thereof capable of enhancing the user's convenience while writing an electronic mail will be described below with reference to the accompanying drawings.

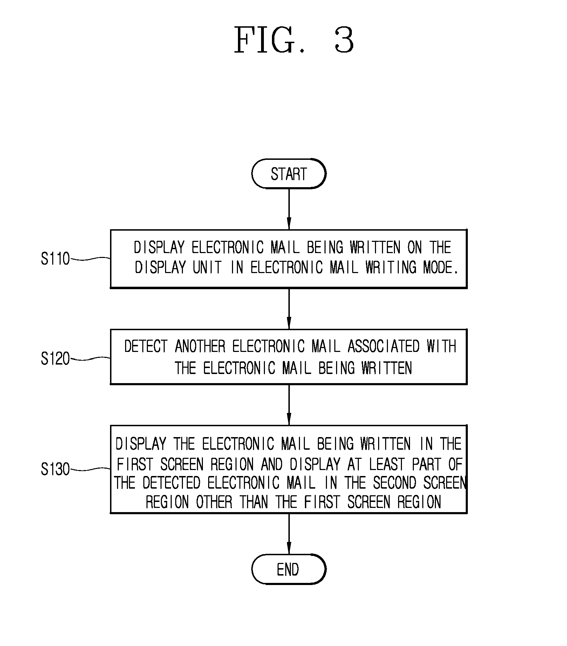

FIG. 3 is a flow chart for explaining a mobile terminal 100 (refer to FIG. 1) according to an embodiment of the present disclosure. The mobile terminal 100 may include a display unit 151 (refer to FIG. 1), and a controller 180 (refer to FIG. 1).

Referring to FIG. 3, the process of displaying an electronic mail being written in an electronic mail writing mode on the display unit 151 (S110) is carried out.

The controller 180 may execute an electronic mail writing mode. Specifically, the electronic mail writing mode may be executed based on the selection of an icon corresponding to the function of writing an electronic mail. Otherwise, the electronic mail writing mode may be also executed based on the selection of an icon corresponding to the function of replying to the received electronic mail.

The display unit 151 may display an electronic mail being written. At this time, a region in which the electronic mail being written is displayed on the display unit 151 may be referred to as an "input region".

Next, the process of detecting another electronic mail associated with the electronic mail being written (S120) is carried out.

The controller 180 may detect another electronic mail associated with the electronic mail being written from an electronic mail received during the writing of the electronic mail. Otherwise, the controller 180 may detect another electronic mail associated with the electronic mail being written from previously received electronic mails or previously stored electronic mails.

When an icon corresponding to the function of transmitting an electronic mail being written is selected, the controller 180 may detect another electronic mail associated with the electronic mail being written.

On the other hand, the controller 180 may perform a different operation based on the type of a touch input to an icon corresponding to the function of transmitting an electronic mail. For example, the controller 180 may detect the another electronic mail associated with the electronic mail being written when a first touch input is sensed on the icon, and transmit the electronic mail being written when a second touch input other than the first touch input is sensed on the icon.

Then, the process of displaying the electronic mail being written in the first screen region and displaying at least part of the detected electronic mail in the second screen region other than the first screen region (S130) is carried out.

Specifically, the controller 180 may divide the display unit 151 into a plurality of regions to generate the first and the second screen region when the another electronic mail is detected in a state that the electronic mail being written is displayed on the display unit 151. Here, the second screen region may include at least one of a region of the plurality of regions, a region overlapped with the electronic mail being written, a region overlapped with a virtual keypad, and a pop-up window region.

When the first and the second screen region are generated, the controller 180 may display the electronic mail being written in the first screen region, and display at least part of the detected electronic mail in the second screen region. In other words, the first screen region may be an input region of the electronic mail, and the second screen region may be a display region of the electronic mail. The controller 180 may display a list of the detected electronic mails or display contents contained in the detected electronic mails, respectively, in the second screen region.

On the other hand, the display region of an electronic mail may be also divided into a plurality of regions. For example, an electronic mail received during the writing of an electronic mail may be displayed on an upper end of the display region, and the previously received electronic mail or previously stored electronic mail may be displayed on a lower end of the display region.

As described above, according to the present disclosure, the mobile terminal 100 may display an electronic mail associated with the electronic mail being written among electronic mails received during the writing of an electronic mail and previously stored electronic mails on the display unit 151. Accordingly, the user may check an electronic mail received during the writing of an electronic mail and thus reflects the content of the received electronic mail on the electronic mail being written. As a result, the user's convenience can be enhanced.

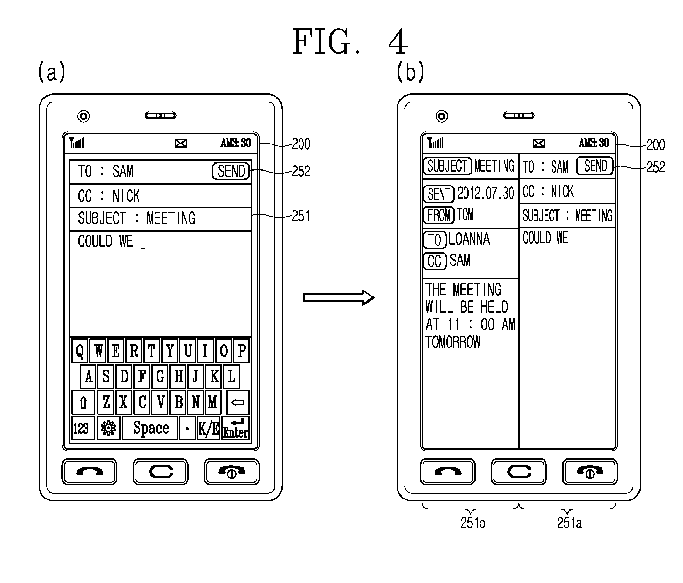

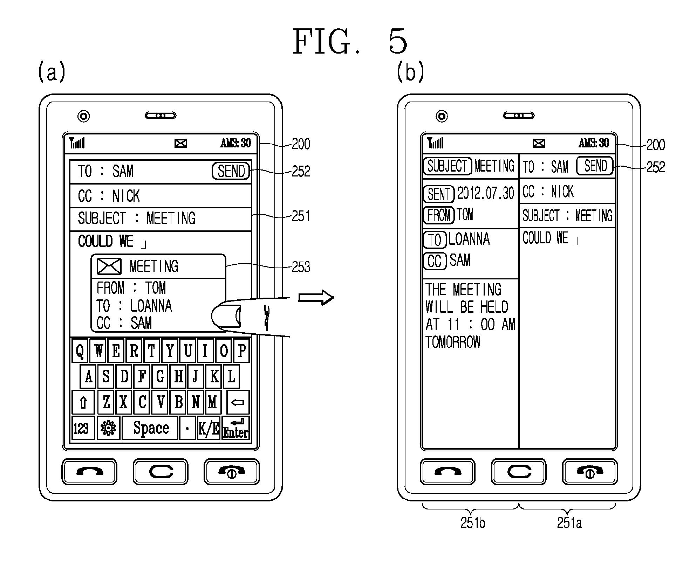

FIGS. 4 and 5 are conceptual views illustrating an operation example of the mobile terminal 200 according to FIG. 3. The mobile terminal 200 may include a display unit 251, and a controller 180 (refer to FIG. 1).

Referring to FIGS. 4A and 5A, the display unit 251 may display an electronic mail being written. Specifically, the display unit 251 may display the addressee, carbon copy, body content, subject, and body content of the electronic mail being written. In addition, the display unit 251 may display a virtual keypad.

As illustrated in FIG. 4A, when an new electronic mail is received during the writing of an electronic mail, the controller 180 may display an electronic mail associated with the electronic mail being written among new electronic mails received during the writing of an electronic mail on the display unit 251.

Though not shown in the drawing, the controller 180 may also display an electronic mail associated with the electronic mail being written among previously received electronic mails or previously stored electronic mails. Furthermore, though not shown in the drawing, the controller 180 may display all new electronic mails received during the writing of an electronic mail on the display unit 251.

Specifically, when a new electronic mail is received during the writing of an electronic mail, and the received new electronic mail is associated with the electronic mail being written, the controller 180 may divide the display unit 251 into a plurality of regions.

Though not shown in the drawing, the controller 180 may divide the display unit 251 into a plurality of regions all the time when a new electronic mail is received during the writing of an electronic mail.

The plurality of regions may include a first and a second screen region 251a, 251b. The controller 180 may display the electronic mail being written in the first screen region 251a and display at least part of the received electronic mail in the second screen region 251b.

A list of the received electronic mails may be displayed in the second screen region 251b. At this time, when at least one electronic mail is selected from the list, a content corresponding to the selected electronic mail may be displayed thereon.

On the other hand, as illustrated in the drawing, the contents of the received electronic mail may be displayed in the second screen region 251b. The type of content may include at least one of the subject, date of sent, sender, addressee, carbon copy, body content, and attached file. Though not shown in the drawing, when the type of content is selected, only contents corresponding to the selected type among contents contained in the electronic mail may be displayed in the second screen region 251b.

When a new electronic mail is received during the writing of an electronic mail as illustrated in FIG. 5A, the controller 180 may display a message 253. At this time, the controller 180 may display the message 253 on the display unit 251 only when the new electronic mail is associated with the electronic mail being written, or display the message 253 all the time on the display unit 251 when the new electronic mail is received.

Specifically, when a new message is received during the writing of an electronic mail, the controller 180 may determine a degree of association between the received electronic mail and the electronic mail being written. The controller 180 may display a message 253 indicating that the new electronic mail has been received on the display unit 251 based on the determination result.

As illustrated in the drawing, the message 253 may be displayed on the display unit 251 in the form of a pop-up window. The message 253 may include information associated with the received electronic mail. More specifically, at least one of the subject, sender, addressee, and carbon copy of the electronic mails may be displayed in the message 253. Though not shown in the drawing, at least part of the body content of the electronic mail may be also displayed at the same time in the message 253.

On the other hand, the message 253 may include information associated with a plurality of electronic mails. In this case, the number of electronic mails associated with the electronic mail being written may be displayed in the message 253.

When a touch input to the message 253 is sensed, as illustrated in FIG. 5B, the controller 180 may display the electronic mail being written in the first screen region 251a, and display an electronic mail corresponding to the message 253 in the second screen region 251b.

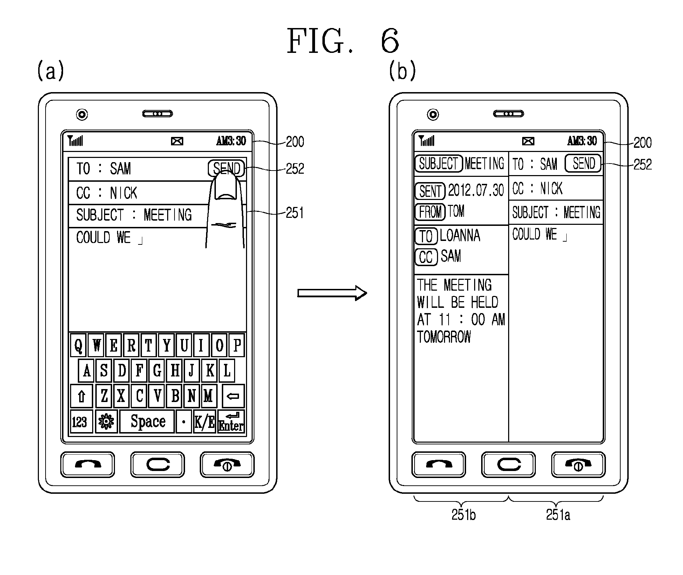

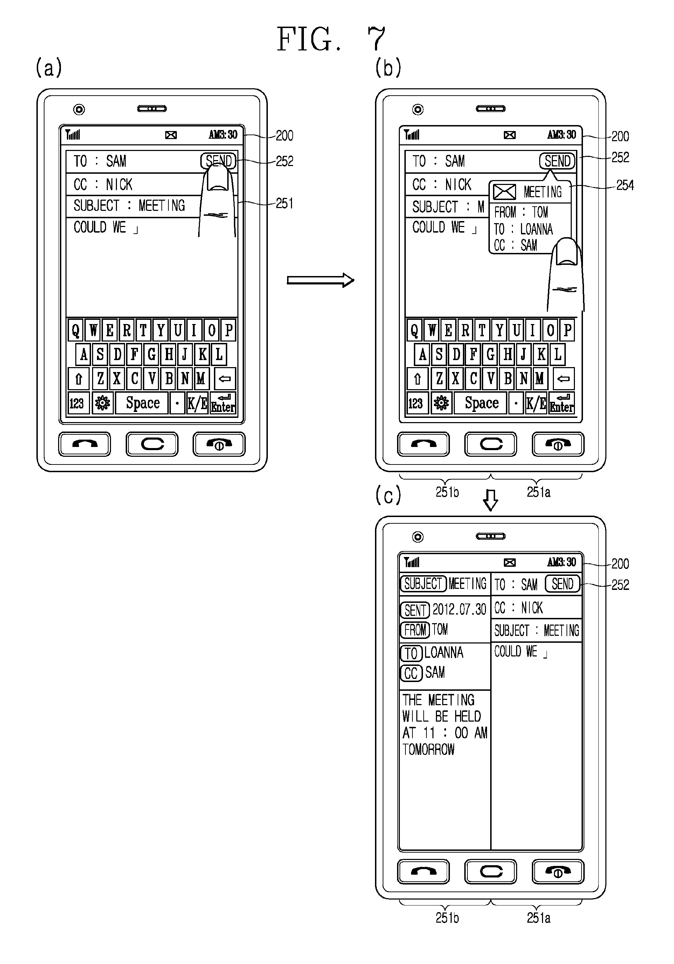

FIGS. 6 and 7 are conceptual views illustrating an operation example of the mobile terminal 200 according to FIG. 3. The mobile terminal 200 may include a display unit 251, and a controller 180 (refer to FIG. 1).

Referring to FIGS. 6A and 7A, the display unit 251 may display an electronic mail being written. The display unit 251 may display an icon (hereinafter, referred to as a "transmission icon") 252 corresponding to the function of transmitting the electronic mail being written at the same time.

Referring to FIG. 6B, when a touch input to the transmission icon 252 is sensed, the controller 180 may display an electronic mail associated with the electronic mail being written among new electronic mails received during the writing of the electronic mail on the display unit 251.

Though not shown in the drawing, the controller 180 may also display an electronic mail associated with the electronic mail being written among previously received electronic mails or previously stored electronic mails on the display unit 251. Furthermore, though not shown in the drawing, the controller 180 may display all new electronic mails received during the writing of an electronic mail on the display unit 251.

To this end, the controller 180 may divide the display unit 251 into a plurality of regions. The plurality of regions may include a first and a second screen region 251a, 251b. The controller 180 may display the electronic mail being written in the first screen region 251a and display at least part of the detected electronic mail in the second screen region 251b.

On the other hand, referring to FIG. 7B, when a touch input to the transmission icon 252 is sensed, the controller 180 may detect an electronic mail associated with the electronic mail being written among new electronic mails received during the writing of the electronic mail, and display a popup window 254 containing at least part of the detected electronic mail on the display unit 251. At least one of the subject, sender, addressee, and carbon copy of the detected electronic mail may be displayed on the popup window 254. Though not shown in the drawing, at least part of the body content of the detected electronic mail may be displayed at the same time on the popup window 254.

When a touch input to the popup window 254 is sensed, as illustrated in FIG. 7C, the controller 180 may display the electronic mail being written in the first screen region 251a, and display an electronic mail corresponding to the popup window 254 in the second screen region 251b.

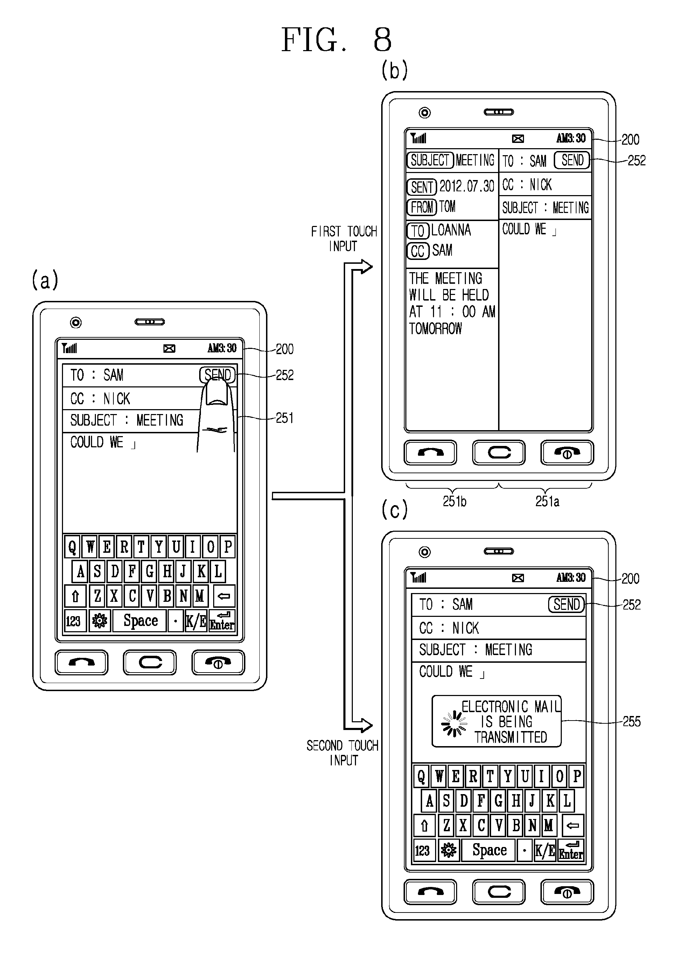

FIG. 8 is a conceptual view illustrating an operation example of the mobile terminal 200 according to FIG. 3. The mobile terminal 200 may include a display unit 251, and a controller 180 (refer to FIG. 1).

Referring to FIG. 8A, the display unit 251 may display an electronic mail being written. The display unit 251 may display an icon (hereinafter, referred to as a "transmission icon") 252 corresponding to the function of transmitting the electronic mail being written at the same time.

The controller 180 may perform a different operation based on the type of a touch input to the transmission icon 252.

For example, referring to FIG. 8B, when a first touch input to the transmission icon 252 is sensed, the controller 180 may detect another electronic mail associated with the electronic mail being written. Accordingly, the same operation as the description illustrated in FIGS. 6 and 7 may be carried out.

On the other hand, referring to FIG. 8C, when a second touch input other than the first touch input is sensed, the controller 180 may immediately transmit the electronic mail being written to the counterpart. At this time, as illustrated in the drawing, a message 255 indicating that the electronic mail is being transmitted or a message indicating that the electronic mail has been transmitted may be displayed on the display unit 251.

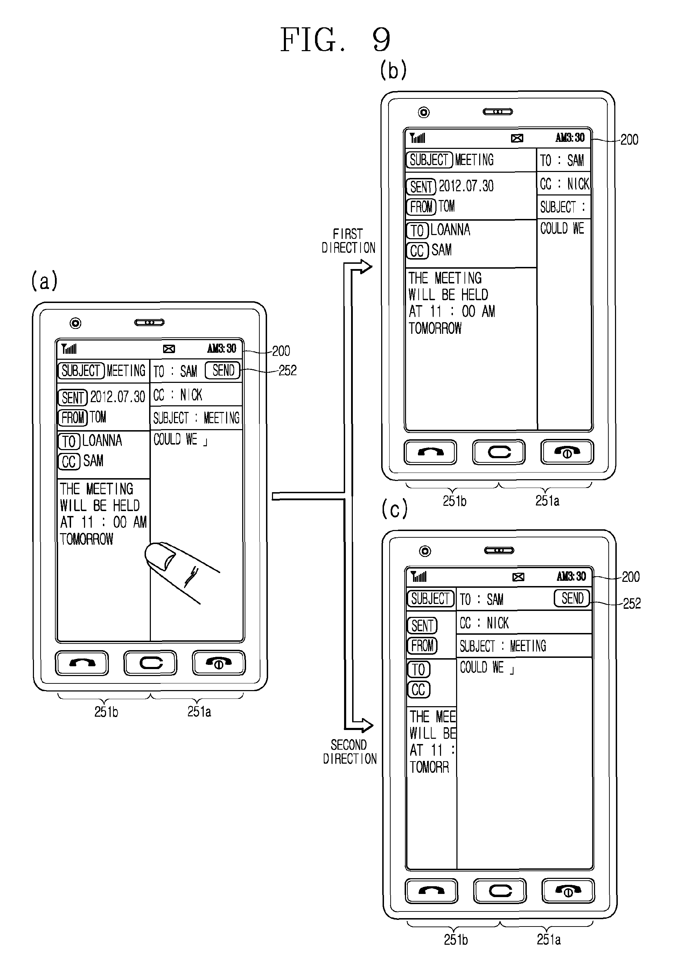

FIG. 9 is a conceptual view illustrating an operation example of the mobile terminal 200 according to FIG. 3. The mobile terminal 200 may include a display unit 251, and a controller 180 (refer to FIG. 1).

Referring to FIG. 9A, the display unit 251 may include a plurality of regions. The plurality of regions may include a first and a second screen region 251a, 251b. The electronic mail being written may be displayed in the first screen region 251a and at least part of the detected electronic mail may be displayed in the second screen region 251b.

A bar for dividing the first and the second screen region 251a, 251b may be selected based on a touch to the display unit 251.

For example, referring to FIG. 9B, when a bar is dragged in the direction of the first screen region 251a, the bar may be moved in the direction of the first screen region 251a.

Accordingly, the size of the second screen region 251b can be enlarged, and at the same time the size of the first screen region 251a can be reduced. As a result, the number of contents displayed in the second screen region 251b may be increased, and at the same time the number of contents displayed in the first screen region 251a may be decreased.

On the other hand, though not shown in the drawing, when the bar is dragged up to the right end of the first screen region 251a, the second screen region 251b may be switched to the entire screen region of the display unit 251, and the first screen region 251a may be hidden.

On the other hand, referring to FIG. 9C, when the bar is dragged in the direction of the second screen region 251b, the bar may be moved in the direction of the second screen region 251b.

Accordingly, the size of the first screen region 251a can be enlarged, and at the same time the size of the second screen region 251b can be reduced. As a result, the number of contents displayed in the first screen region 251a may be increased, and at the same time the number of contents displayed in the second screen region 251b may be decreased.

According to a bar movement function as described above, the size of the screen region may be enlarged, and thus more contents may be displayed in the screen region of the user's interest. Accordingly, it may be possible to enhance the user's convenience associated with the content view function.

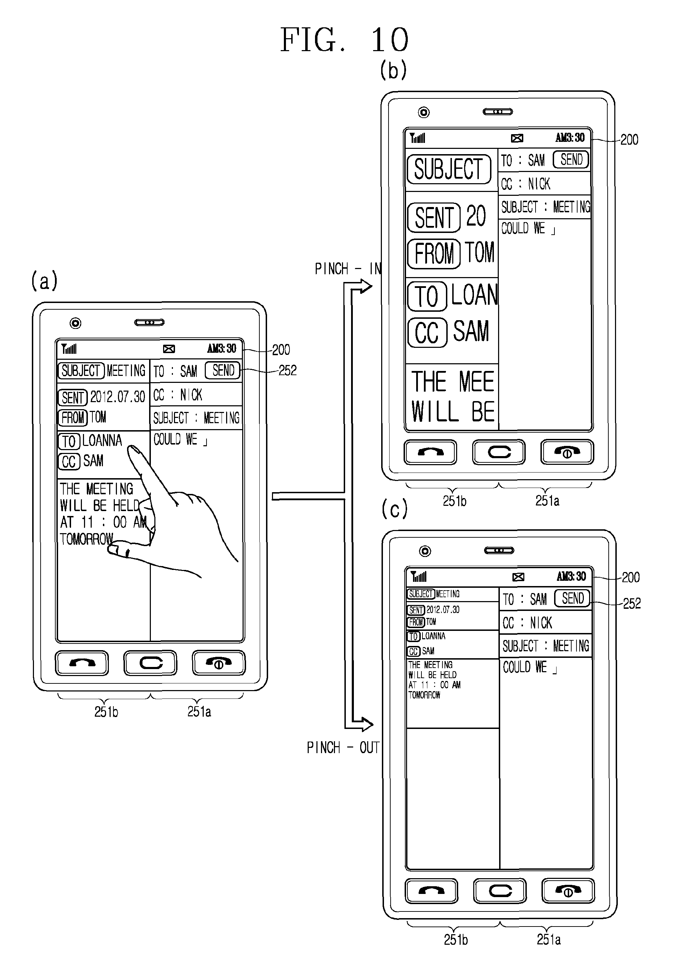

FIG. 10 is a conceptual view illustrating an operation example of the mobile terminal 200 according to FIG. 3. The mobile terminal 200 may include a display unit 251, and a controller 180 (refer to FIG. 1).

The sensing unit 140 (refer to FIG. 1) may sense a control command (hereinafter, referred to as a "content size increase/decrease command") for increasing or decreasing the size of content displayed in the first and the second screen region 251a, 251b. The sensing unit 140 may sense a multi touch, a double tap, or the like to the first and the second screen region 251a, 251b.

For example, referring to FIG. 10A, when the first screen region 251a is multi-touched using two fingers and dragged while gradually widening a gap between two fingers, the content size increase command may be sensed.

The controller 180 may increase the size of contents displayed in the first screen region 251a based on the sensed content size increase command as illustrated in the drawing. As a result, the number of contents displayed in the first screen region 251a may be decreased.

On the contrary, referring to FIG. 10B, when the first screen region 251a is multi-touched using two fingers and dragged while gradually narrowing a gap between two fingers, the content size decrease command may be sensed.

The controller 180 may decrease the size of contents displayed in the first screen region 251a based on the sensed content size decrease command as illustrated in the drawing. As a result, the number of contents displayed in the first screen region 251a may be increased.

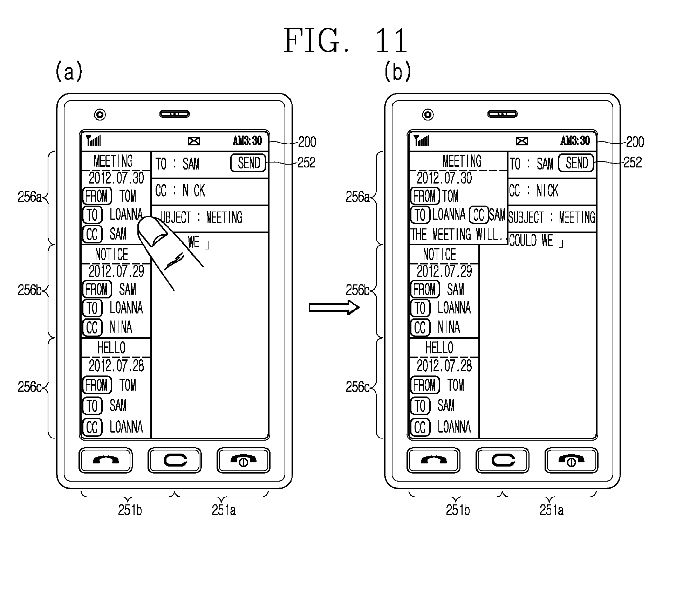

FIG. 11 is a conceptual view illustrating an operation example of the mobile terminal 200 according to FIG. 3. The mobile terminal 200 may include a display unit 251, and a controller 180 (refer to FIG. 1).

Referring to FIG. 11A, an electronic mail being written may be displayed in the first screen region 251a and at least part of the detected electronic mail may be displayed in the second screen region 251b.

A plurality of the detected electronic mails 256a, 256b, 256c may be displayed in the second screen region 251b. As illustrated in the drawing, at least one of the subject, date of sent, sender, addressee, and carbon copy of the plurality of electronic mails 256a, 256b, 256c, respectively, may be displayed in the second screen region 251b. At least part of the body content of the plurality of electronic mails 256a, 256b, 256c may be displayed at the same time in the second screen region 251b.

The plurality of electronic mails 256a, 256b, 256c may be displayed in various arrangement methods. For example, the plurality of electronic mails 256a, 256b, 256c may be arranged in the order of high degree of association with the electronic mail being written, in the order of recently received, and in the order of high priority, or the like. On the other hand, the arrangement order of the plurality of electronic mails 256a, 256b, 256c may be changed based on whether an attached file is contained in the plurality of electronic mails 256a, 256b, 256c, respectively.

Furthermore, though not shown in the drawing, an icon for changing the arrangement order may be displayed on the display unit 251, and the arrangement order of the plurality of electronic mails 256a, 256b, 256c may be changed based on a touch input to the icon.

When a touch input to at least one of the plurality of electronic mails 256a, 256b, 256c is sensed, as illustrated in FIG. 11B, the controller 180 may display the touched electronic mail (for example, first electronic mail 256a) in an enlarged manner.

At this time, as illustrated in the drawing, the body content of the touched first electronic mail 256a may be further displayed thereon. On the other hand, though not shown in the drawing, the size of the first electronic mail 256a may be displayed in an enlarged manner. Though not shown in the drawing, the full text of the first electronic mail 256a may be all displayed thereon, and to this end, a popup window containing the full text of the first electronic mail 256a may be displayed thereon.

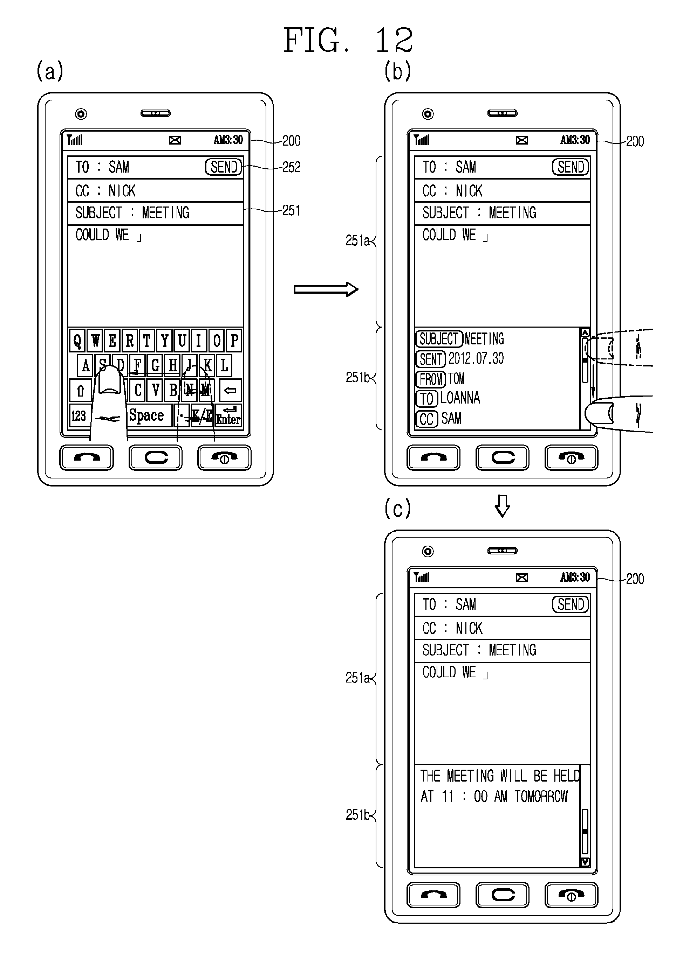

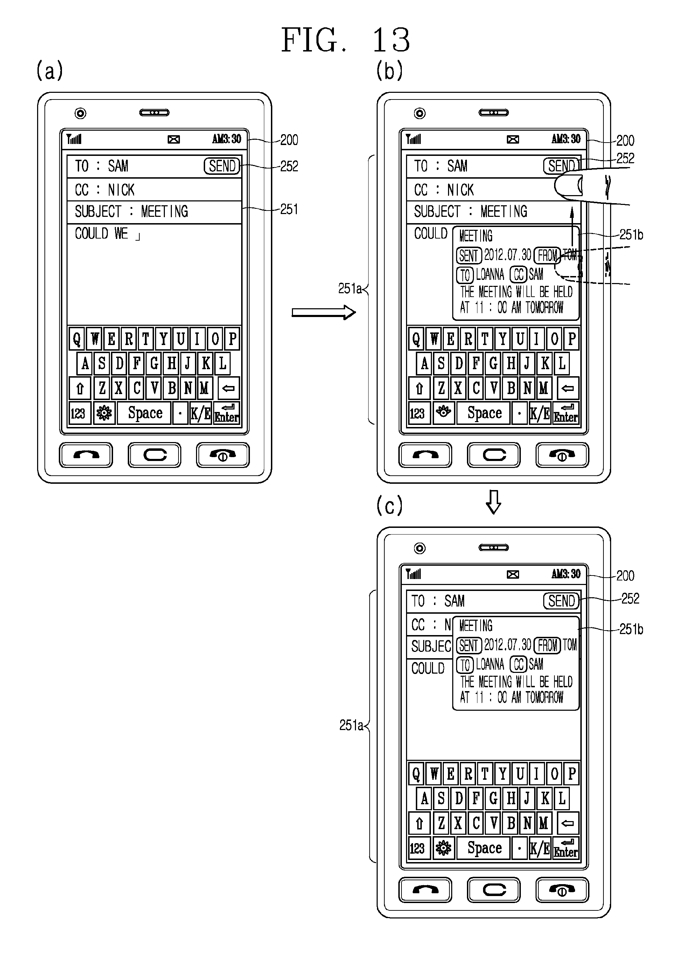

FIGS. 12 and 13 are conceptual views illustrating an operation example of the mobile terminal 200 according to FIG. 3. The mobile terminal 200 may include a display unit 251 (refer to FIG. 1), and a controller 180 (refer to FIG. 1).

The display unit 251 may display at least part of the electronic mail being written and the detected electronic mail. Hereinafter, a region displayed with the electronic mail being written is referred to as an "input region," and a region displayed with the detected electronic mail is referred to as a "display region." The display region may have various forms.

Referring to FIG. 12A, the display unit 251 may display a virtual keypad. The user may apply a touch input to the virtual keypad to enter text in the input region.

At this time, when a preset touch input to the virtual keypad is sensed, as illustrated in FIG. 12B, the detected electronic mail may be displayed in a region 251b on which the virtual keypad has been displayed. The region 251b on which the virtual keypad has been displayed may include a scroll bar, and as illustrated in FIG. 12C, more contents of the detected electronic mail may be displayed based on a touch input to the scroll bar.

Though it is illustrated in the drawing that the virtual keypad disappears from the region 251b on which the virtual keypad has been displayed and the detected electronic mail is displayed thereon, the virtual keypad does not disappear all the time. For example, the detected electronic mail may be displayed to be overlapped with the virtual keypad. In this case, the virtual keypad may be displayed in a semi-transparent manner, thereby allowing the user to view the electronic mail. The user may adjust the transparency of the virtual keypad.

Furthermore, when the image display direction of the display unit 251 is switched to the landscape direction having a greater horizontal length of the image than a vertical length thereof from the portrait direction having a greater vertical length of the image than a horizontal length thereof due to the rotation of the body, the detected electronic mail may be displayed only in a partial region of the region 251b on which the virtual keypad has been displayed. In this case, the size of the virtual keypad may be decreased and displayed all the time on the display unit 251.

On the other hand, referring to FIGS. 13A and 13B, when a new electronic mail associated with the electronic mail being written is received during the writing of the electronic mail, the display unit 251 may display a popup window 251b containing the content of the received electronic mail on the display unit 251. At least one of the subject, date of sent, sender, addressee, carbon copy, and body content of the electronic mail may be displayed on the popup window 251b.

Referring to FIGS. 13B and 13C, the controller 180 may move the location of the popup window 251b based on a touch input to the popup window 251b. Though not shown in the drawing, the controller 180 may change the transparency of the popup window 251b. For example, when the popup window 251b is displayed to be overlapped with the input region, the controller 180 may change the transparency of the popup window 251b such that contents displayed in the input region can be projected on the popup window 251b.

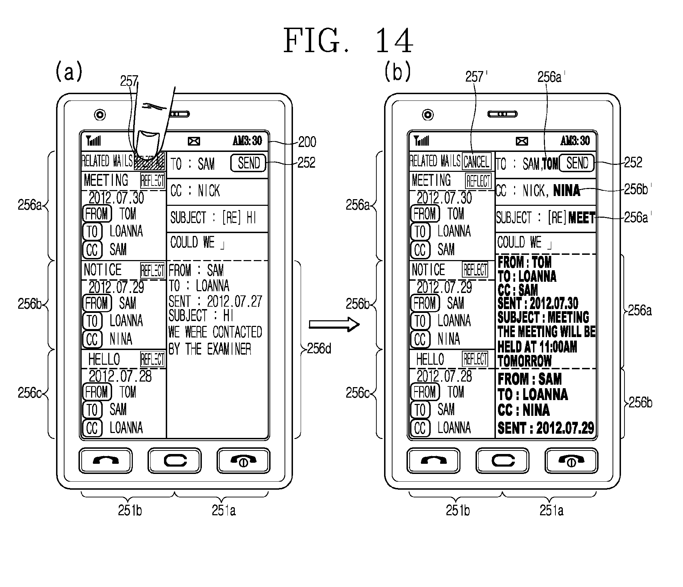

FIG. 14 is a conceptual view illustrating an operation example of the mobile terminal 200 according to FIG. 3. The mobile terminal 200 may include a display unit 251, and a controller 180 (refer to FIG. 1).

Referring to FIG. 14A, an electronic mail being written may be displayed in the first screen region 251a of the display unit 251 and at least part of the detected electronic mail may be displayed in the second screen region 251b.

A plurality of the detected electronic mails (hereinafter, referred to as "first through third electronic mails") 256a, 256b, 256c may be displayed in the second screen region 251b. As illustrated in the drawing, at least one of the subject, date of sent, sender, addressee, and carbon copy of the first through third electronic mails 256a, 256b, 256c may be displayed in the second screen region 251b. At least part of the body content of the first through third electronic mails 256a, 256b, 256c may be displayed at the same time in the second screen region 251b.

Though the first through third electronic mails 256a, 256b, 256c are displayed respectively, a method of displaying electronic mails will not be limited to this. For example, the electronic mails may be grouped into a plurality of groups based on the attribute information of electronic mails, respectively. The controller 180 may display electronic mails contained in the plurality of groups, respectively, by dividing them into each group.

Here, the attribute information of electronic mails, respectively, may include at least one of degree-of-association information with the electronic mail being written, time information at which the detected electronic mail is received and transmitted, priority information of the detected electronic mail, and information associated with whether or not an attached file is contained in the detected electronic mail.

The electronic mail being written may be displayed in the first screen region 251a as a reply to the previously received electronic mail (hereinafter, referred to as a "fourth electronic mail") 256d. As illustrated in the drawing, the subject of the fourth electronic mail 256d is "HI", the subject of the electronic mail being written may be automatically specified as "[RE] HI". Furthermore, the body content of the fourth electronic mail 256d may be displayed at a lower end thereof adjacent to the electronic mail being written.

The controller 180 may add contents contained in the first through third electronic mails 256a, 256b, 256c, respectively, to the electronic mail being written. To this end, as illustrated in the drawing, an icon (hereinafter, referred to as "reflect all") 257 capable of selecting whether all contents contained in the first through third electronic mails 256a, 256b, 256c, respectively, are added to the electronic mail being written may be displayed in the second screen region 251b.

When the reflect all icon 257 is selected, the controller 180 may compare a content contained in the electronic mail being written with contents contained in the first through third electronic mails 256a, 256b, 256c, respectively, and determine which one of the contents contained in the first through third electronic mails 256a, 256b, 256c, respectively, to be added to the electronic mail being written based on the comparison result.

Specifically, when the reflect all icon 257 is selected, as illustrated in FIG. 14B, the controller 180 may add the subject "MEETING", the addressee "TOM" and the body content among the contents of the first electronic mail 256a that has been most recently received to the electronic mail being written.

Here, since the subject of the first electronic mail 256a that has been received more recently than the fourth electronic mail 256d is "MEETING", the subject of the electronic mail being written may be changed to "[RE] MEETING". Furthermore, the body content of the first electronic mail 256a that has been received more recently than the fourth electronic mail 256d may be displayed at a lower end thereof adjacent to the electronic mail being written. Accordingly, it is seen that the user is currently writing an electronic mail as a reply to the first electronic mail 256a.

Furthermore, since the sender "TOM" of the first electronic mail 256a is not specified as the addressee or carbon copy of the electronic mail being written, "TOM" may be specified as a new addressee of the electronic mail being written.

At this time, a content 256a' added from the first electronic mail 256a may be displayed in a highlighted manner in the electronic mail being written. For example, the bold or color attribute of the content 256' added from the first electronic mail 256a may be controlled in the electronic mail being written to distinguish the content that has been contained in the electronic mail being written from the content 256a' added from the first electronic mail 256a. Though not shown in the drawing, an icon indicating that the content has been added from the first electronic mail 256a may be displayed together with the content 256a' added from the first electronic mail 256a.

Furthermore, though not shown in the drawing, a content contained in the electronic mail being written may be displayed in an highlighted manner even in the first electronic mail 256a.

Similarly, the controller 180 may add the carbon copy "NINA" and the body content among the contents of the second electronic mail 256b to the electronic mail being written. At this time, a content 256b' added from the second electronic mail 256b may be displayed in an highlighted manner in the electronic mail being written.

Though not shown due to the size limit of the display unit 251, the controller 180 may add the body content among the contents of the third electronic mail 256c to the electronic mail being written. At this time, the content added from the third electronic mail 256c may be displayed in an highlighted manner in the electronic mail being written.

On the other hand, an electronic mail displayed in the second screen region 251b while the user writes an electronic mail, as the electronic mail received during the writing of the electronic mail, may be classified as one of "read mails" after the user transmits the electronic mail. In other words, an electronic mail displayed in the second screen region 251b while the user writes an electronic mail may be assumed that the user has read the electronic mail.

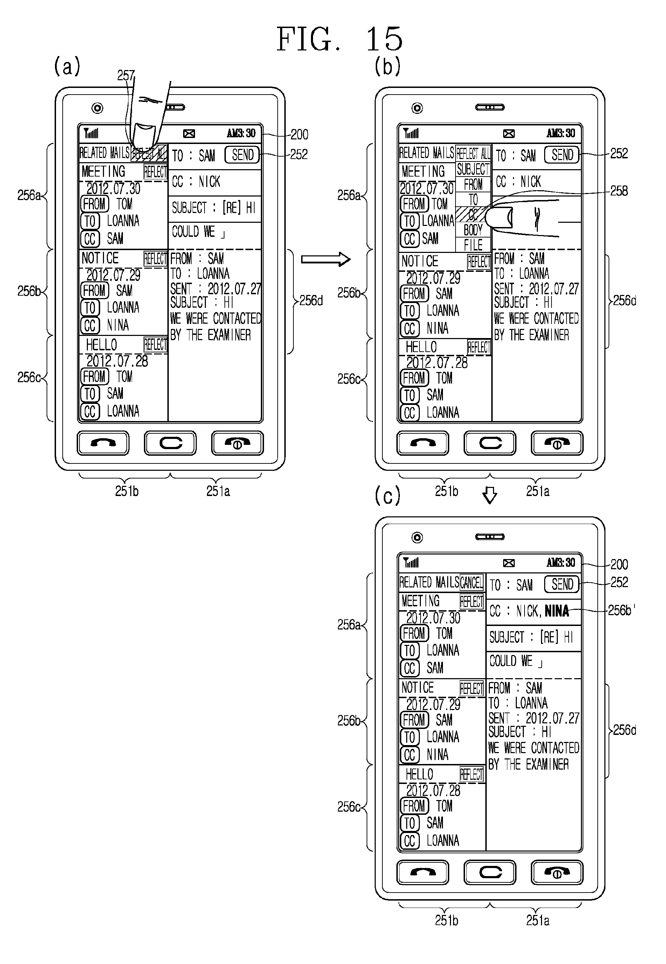

FIG. 15 is a conceptual view illustrating an operation example of the mobile terminal 200 according to FIG. 3. The mobile terminal 200 may include a display unit 251, and a controller 180 (refer to FIG. 1).

Referring to FIG. 15A, an electronic mail being written may be displayed in the first screen region 251a of the display unit 251 and the detected first through third electronic mails 256a, 256b, 256c may be displayed in the second screen region 251b.

Furthermore, a reflect all icon 257 capable of selecting whether all contents contained in the first through third electronic mails 256a, 256b, 256c, respectively, are added to the electronic mail being written may be displayed in the second screen region 251b.

When the reflect all icon 257 is selected, a menu 258 capable of selecting the type of content to be added to the electronic mail being written may be displayed thereon. Here, the type of content may include at least one of the subject, addressee, carbon copy, body content and attached file.

As illustrated in FIG. 15B, when a carbon copy is selected as the type of content, the controller 180 may add the content carbon copy among the contents contained in first through third electronic mails 256a, 256b, 256c, respectively, to the electronic mail being written.

Specifically, the controller 180 may compare the carbon copies of the first through third electronic mails 256a, 256b, 256c with the carbon copy of the electronic mail being written, and add the carbon copy "NINA" of the second electronic mail 256b to the electronic mail being written based on the comparison result as illustrated in FIG. 15C. At this time, the newly added "NINA" 256b' may be displayed in a highlighted manner in the electronic mail being written.

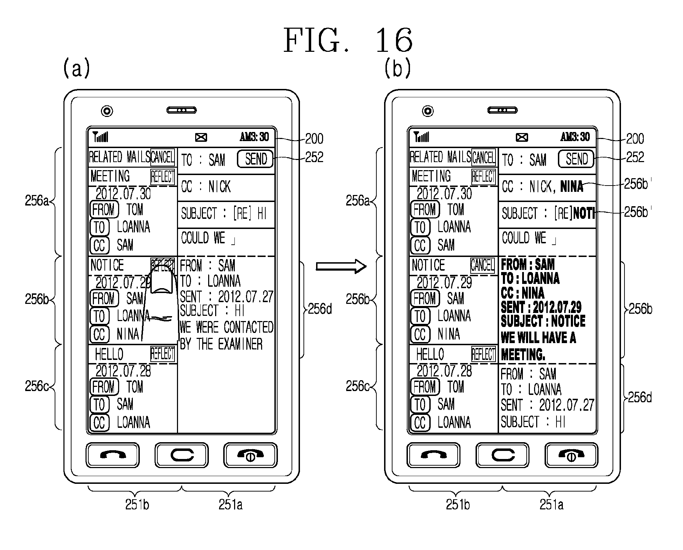

FIG. 16 is a conceptual view illustrating an operation example of the mobile terminal 200 according to FIG. 3. The mobile terminal 200 may include a display unit 251, and a controller 180 (refer to FIG. 1).

Referring to FIG. 16A, an electronic mail being written may be displayed in the first screen region 251a of the display unit 251 and the detected first through third electronic mails 256a, 256b, 256c may be displayed in the second screen region 251b.

Furthermore, a reflect icon capable of selecting whether contents contained in the first through third electronic mails 256a, 256b, 256c, respectively, are added to the electronic mail being written may be displayed for each of the first through third electronic mails 256a, 256b, 256c.

As illustrated in the drawing, when the reflect icon displayed together with the second electronic mail 256b is selected, as illustrated in FIG. 16B, the controller 180 may add the subject "NOTICE", the carbon copy "NINA" and the body content among the contents of the second electronic mail 256b that has been most recently received to the electronic mail being written.

Here, since the subject of the second electronic mail 256b that has been received more recently than the fourth electronic mail 256d is "NOTICE", the subject of the electronic mail being written may be changed to "[RE] NOTICE". Furthermore, the body content of the second electronic mail 256b that has been received more recently than the fourth electronic mail 256d may be displayed at a lower end thereof adjacent to the electronic mail being written. Accordingly, it is seen that the user is currently writing an electronic mail as a reply to the second electronic mail 256b.

Furthermore, since the carbon copy "NINA" of the second electronic mail 256b is not specified as the addressee or carbon copy of the electronic mail being written, "NINA" may be specified as a new addressee of the electronic mail being written.

At this time, a content 256b' added from the second electronic mail 256b may be displayed in a highlighted manner in the electronic mail being written.

On the other hand, the reflect icon that has been displayed together with the second electronic mail 256b may be changed to a cancel icon. Accordingly, though not shown in the drawing, when the user selects the cancel icon, the reflection of the second electronic mail 256b may be cancelled.

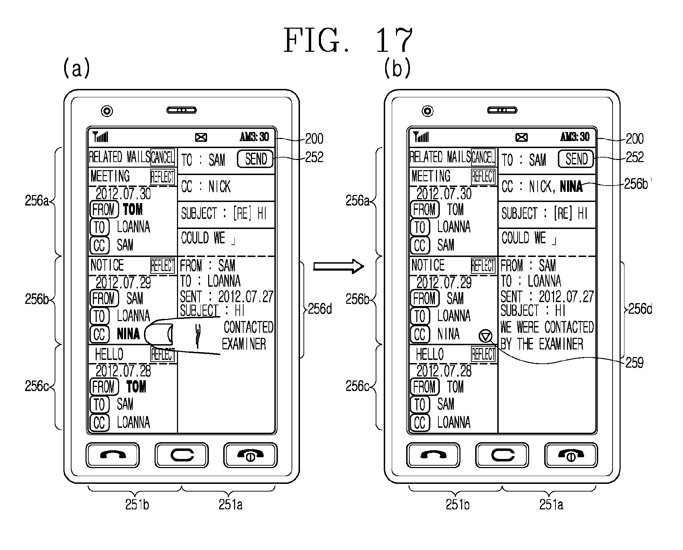

FIG. 17 is a conceptual view illustrating an operation example of the mobile terminal 200 according to FIG. 3. The mobile terminal 200 may include a display unit 251, and a controller 180 (refer to FIG. 1).

Referring to FIG. 17A, an electronic mail being written may be displayed in the first screen region 251a of the display unit 251 and the detected first through third electronic mails 256a, 256b, 256c may be displayed in the second screen region 251b.

The controller 180 may compare a content contained in the electronic mail being written with contents contained in the first through third electronic mails 256a, 256b, 256c, respectively, and recommend a content to be added to the electronic mail being written among the contents contained in the first through third electronic mails 256a, 256b, 256c, respectively, based on the comparison result.

For example, since the sender "TOM" of the first electronic mail 256a is not specified as the addressee or carbon copy of the electronic mail being written, the controller 180 may recommend "TOM" as a new addressee of the electronic mail being written. Similarly, the controller 180 may recommend the carbon copy "NINA" of the second electronic mail 256b as a new addressee of the electronic mail being written. Meanwhile, as illustrated in the drawing, the recommended carbon copy may be displayed in a highlighted manner.

When at least part of the recommended contents is selected, as illustrated in FIG. 17B, the controller 180 may add the selected content to the electronic mail being written. For example, when the carbon copy "NINA" of the second electronic mail 256b is selected, the controller 180 may specify "NINA" as a new carbon copy of the electronic mail being written.

On the other hand, when the selected content is added to the electronic mail being written, the controller 180 may display an indicator in an electronic mail containing the selected content. Accordingly, as illustrated in FIG. 17B, an indicator 259 may be displayed at a locatioin adjacent to the carbon copy "NINA" of the second electronic mail 256b.

Though not shown in the drawing, when the carbon copy "NINA" of the second electronic mail 256b is selected again or the indicator 259 is selected, the indication of the new carbon copy ("NINA") of the electronic mail being written may be cancelled.

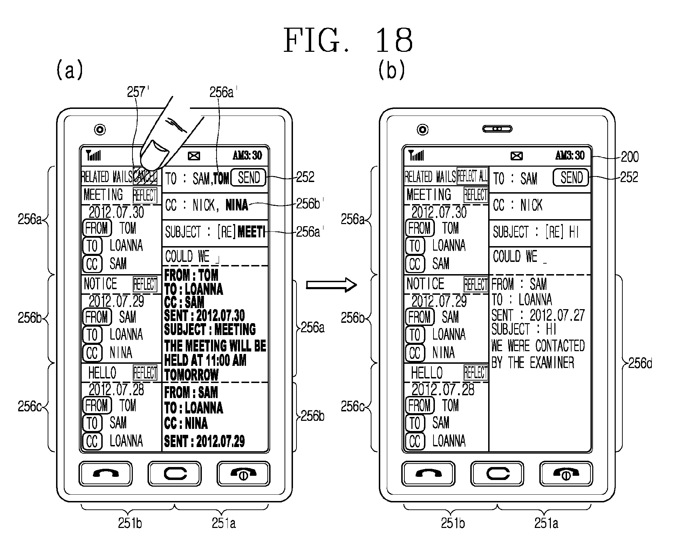

FIG. 18 is a conceptual view illustrating an operation example of the mobile terminal 200 according to FIG. 3. The mobile terminal 200 may include a display unit 251, and a controller 180 (refer to FIG. 1).

Referring to FIG. 18A, an electronic mail being written may be displayed in the first screen region 251a of the display unit 251 and the detected first through third electronic mails 256a, 256b, 256c may be displayed in the second screen region 251b.

As illustrated in FIG. 14B in the above, the subject "MEETING", the addressee "TOM" and the body content among the contents of the first electronic mail 256a that has been most recently received may be added to the electronic mail being written. Furthermore, the carbon copy "NINA" and the body content among the contents of the second electronic mail 256b may be added to the electronic mail being written. Though not shown due to the size limit of the display unit 251, the body content among the contents of the third electronic mail 256c may be added to the electronic mail being written.

The display unit 251 may display an icon (hereinafter, referred to as a "cancel icon") 257' for cancelling the addition of a content. When a touch input to the cancel icon 257' is sensed, as illustrated in FIG. 18B, the controller 180 may cancel the addition of the content of the first through third electronic mails 256a, 256b, 256c to the electronic mail being written. Accordingly, the body content of the first through third electronic mails 256a, 256b, 256c that has been displayed at a lower end of the electronic mail being written may be disappeared.

Furthermore, according to an embodiment disclosed in the present disclosure, the foregoing method may be implemented as codes readable by a processor on a medium written by a program. Examples of the processor-readable media may include ROM, RAM, CD-ROM, magnetic tape, floppy disk, and optical data storage device, and the like, and also include a device implemented in the form of a carrier wave (for example, transmission via the Internet).

The configurations and methods according to the above-described embodiments will not be applicable in a limited way to the foregoing mobile terminal, and all or part of each embodiment may be selectively combined and configured to make various modifications thereto.

## Claims

1. A mobile terminal, comprising:
a display unit(151) configured to display an electronic mail being written in an electronic mail writing mode;
a controller(180) configured to detect another electronic mail associated with the electronic mail being written, and to control the display unit to display the electronic mail being written in a first screen region and display at least part of the detected electronic mail in a second screen region other than the first screen region,
wherein the controller(180) detects the another electronic mail associated with the electronic mail being written from at least one of an electronic mail received during the writing of the electronic mail and prestored electronic mails.

2. The mobile terminal of claim 1, wherein the controller(180) detects the another electronic mail associated with the electronic mail being written when an icon corresponding to the function of transmitting the electronic mail being written is selected.

3. The mobile terminal of claim 2, wherein the controller(180) detects the another electronic mail associated with the electronic mail being written when a first touch input is sensed on the icon, and transmits the electronic mail being written when a second touch input other than the first touch input is sensed on the icon.

4. The mobile terminal of any one of claims 1 and 2, wherein the controller(180) generates the first and the second screen region when the another electronic mail is detected in a state that the electronic mail being written is displayed on the display unit(151), and controls the display unit(151) to display the electronic mail being written in the first screen region, and display at least part of the detected electronic mail in the second screen region.

5. The mobile terminal of claim 4, wherein the controller(180) controls the display unit(151) to display a list of the detected electronic mails or display contents contained in the detected electronic mails, respectively, in the second screen region.

6. The mobile terminal of claim 5, wherein when the display unit(151) is divided into a plurality of regions, the second screen region comprises at least one of a region of the plurality of regions, a region overlapped with the electronic mail being written, a region overlapped with a virtual keypad, and a pop-up window region.

7. The mobile terminal of any one of claims 1, 2 and 4 wherein when a new electronic mail is received during the writing of the electronic mail, the controller(180) determines a degree of association between the received electronic mail and the electronic mail being written, and controls the display unit(151) to display a message indicating that the new electronic mail has been received based on the determination result.

8. The mobile terminal of claim 7, wherein the message comprises information associated with the received electronic mail, and
the controller(180) generates the first and the second screen region when the message is selected, and controls the display unit(151) to display at least part of the received electronic mail in the second screen region.

9. The mobile terminal of any one of claims 1, 2, 4 and 7 wherein the controller(180) groups the detected electronic mails into a plurality of groups based on the attribute information of the detected electronic mails, respectively, and controls the display unit(151) to display electronic mails contained in the plurality of groups, respectively, by dividing them into each group.

10. The mobile terminal of claim 9, wherein the attribute information of the detected electronic mails, respectively, comprises at least one of degree-of-association information with the electronic mail being written, time information at which the detected electronic mail is received and transmitted, priority information of the detected electronic mail, and information associated with whether or not an attached file is contained in the detected electronic mail.

11. The mobile terminal of any one of claims 1, 2, 4, 7 and 9 wherein the controller(180) adds a content contained in the detected electronic mails, respectively, to the electronic mail being written.

12. The mobile terminal of claim 11, wherein when the type of content is selected, the controller(180) adds a content corresponding to the selected type among contents contained in the detected electronic mails, respectively, to the electronic mail being written.

13. The mobile terminal of claim 12, wherein the type of content comprises at least one of the subject, addressee, carbon copy, body content, and attached file of the detected electronic mails, respectively.

14. The mobile terminal of claim 11, wherein the controller(180) compares a content contained in the electronic mail being written with contents contained in the detected electronic mails, respectively, and recommends a content to be added to the electronic mail being written among the contents contained in the detected electronic mails, respectively.

15. The mobile terminal of claim 14, wherein the controller(180) controls the display unit to display the recommended content in a highlighted manner among the contents contained in the detected electronic mails, respectively.
